# DEMANDE DE BREVET EUROPEEN

(11) **EP 4 799 803 A1**
(43) Date de publication de la demande: **02.09.2026**
(21) Numéro de dépôt: 26161033.1
(22) Date de dépôt: 26.02.2026
(51) Int. Cl.: B32B 1/08, B32B 11/08

(54) **COMPOSITION ANTICORROSION BIOSOURCEE POUR LA PROTECTION DE CANALISATIONS**

(30) Priorité: 28.02.2025 FR 2502032
(71) Demandeur: Eiffage Infrastructures, 78140 Vélizy-Villacoublay (FR)
(72) Inventeur: LEJOSNE, Benoît, 78140 VELIZY VILLACOUBLAY (FR); SCHREVEL, Florent, 78140 VELIZY VILLACOUBLAY (FR); GEISLER, Flavien, 78140 VELIZY VILLACOUBLAY (FR)
(74) Mandataire: Plasseraud IP

(57) **Abrégé**

La présente divulgation concerne une composition, biosourcée, comprenant de la poix biosourcée et de la cire biosourcée dans un ratio massique poix biosourcée sur cire biosourcée, utile en particulier pour le remplissage d'un espace interstitiel, également appelé espace inter annulaire, en vue de protéger une canalisation contre le phénomène de corrosion.

## Description

### Domaine technique

La présente divulgation relève du domaine des compositions anticorrosion. Plus particulièrement, la présente divulgation concerne une composition anticorrosion utile pour la protection de canalisations, ladite composition étant biosourcée.

### Technique antérieure

Plusieurs compositions anticorrosion sont disponibles à ce jour, on peut par exemple citer le document RU 2 094 530 C1 qui divulgue une composition anti-corrosion et résistante à l'eau comprenant de 18 à 20% de cire, de 2 à 10% de polyéthylène polyamine et de 72 à 80% de poix de tall oil et le document CN 117 025 192 A qui divulgue une cire émulsifiée inhibitrice de corrosion, caractérisée en ce qu'elle comprend les matières premières suivantes en parts en poids dans laquelle les ingrédients actifs inhibiteurs de corrosion sont choisis parmi : imidazoline cycloalicylique, imidazoline polyoxyéthylène éther, acide oléique polyoxyéthylène éther, sel d'ammonium quaternaire d'imidazoline, bétaïne d'imidazoline d'acide naphténique, imidazoline à base de colophane, une ou plusieurs des imidazolines amidoalkyles, sel d'ammonium quaternaire alkynoxyméthyle, méthénamine et triéthanolamine. Les compositions anticorrosion sont généralement adaptées au dispositif à protéger de la corrosion.

Les canalisations, en particulier les canalisations métalliques souterraines, sont sujettes au phénomène de corrosion, notamment en raison de l'humidité ambiante, parfois combinée à des températures élevées. Par ailleurs, il est courant qu'une canalisation soit insérée au sein d'un fourreau. Dans ce cas, on trouve fréquemment un espace interstitiel entre le fourreau et la canalisation. Cet espace interstitiel est préjudiciable pour la canalisation car de l'humidité peut se retrouver piégée entre la canalisation et le fourreau, ce qui accentue la dégradation de la canalisation par un phénomène de corrosion.

La société Trenton a proposé de remplir cet espace interstitiel par injection de cire à chaud ou à froid. On peut citer par exemple le Fill-Coat ^{®} (https://trentoncorp.com/products/casing-filling/fill-coat-6-cold-applied-wax-casing-filler/), une composition à base de produit dérivé de pétrole.

Dans un souci environnemental, il serait bénéfique de disposer d'une composition biosourcée pour remplir les espaces interstitiels dans les canalisations insérées dans un fourreau.

Par biosourcée, on entend une composition comprenant essentiellement, ou mieux constituée de matières premières issues de la biomasse végétale ou de ressources d'origine animale.

### Résumé de l'invention

La présente divulgation vise à proposer une composition, biosourcée, utile en particulier pour le remplissage de l'espace interstitiel, également appelé espace inter annulaire, en vue de la protection de la canalisation contre le phénomène de corrosion.

Ainsi, il est proposé une composition comprenant de la poix biosourcée et de la cire biosourcée dans un ratio massique poix biosourcée sur cire biosourcée, m_{P}/m_{C}, compris entre 2,5 et 5,5.

La présente divulgation concerne également l'utilisation de la composition, décrite ci-dessus, pour protéger un élément métallique contre un phénomène de corrosion.

La présente divulgation propose aussi un ensemble canalisation (1) comprenant une canalisation (2), contenue dans un fourreau (3) et présentant un espace interstitiel (4) entre la canalisation (2) et le fourreau (3), caractérisé en ce que l'espace interstitiel (4) comprend la composition décrite ci-dessus.

### Brève description des dessins

**Fig. 1**

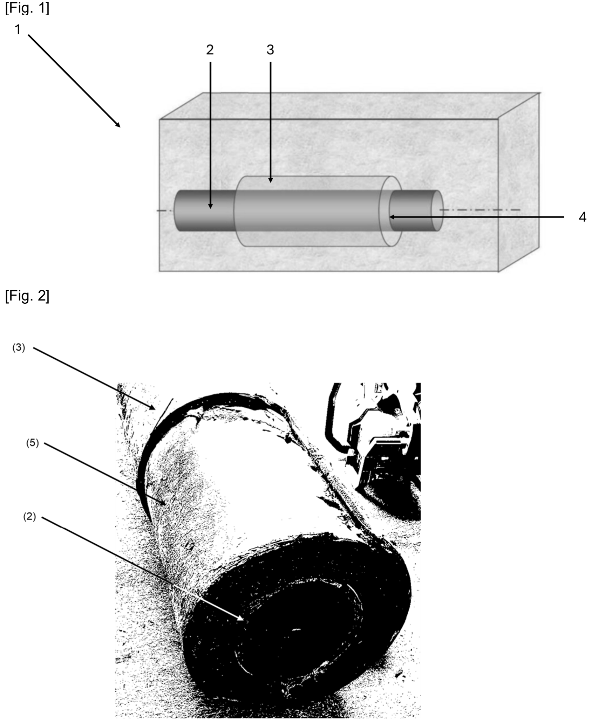

   [Fig. 1] La figure 1 montre un ensemble canalisation comprenant une canalisation insérée dans un fourreau.
**Fig. 2**
   [Fig. 2] La figure 2 est une photo d'une coupe d'un ensemble canalisation comprenant une canalisation insérée dans un fourreau et la composition selon l'invention dans l'espace interstitiel entre le fourreau et la canalisation.
**Fig. 3**

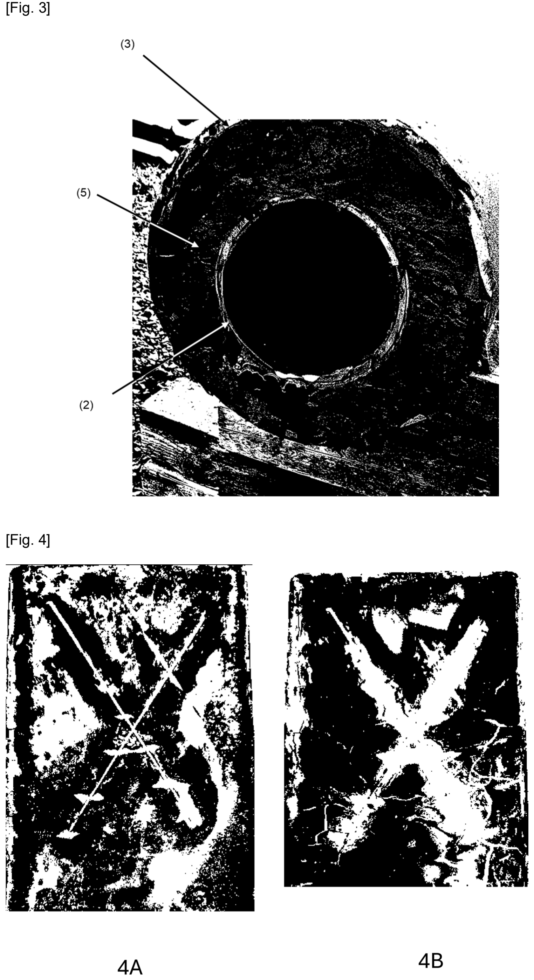

   [Fig. 3] La figure 3 est une photo d'une autre coupe d'un ensemble canalisation comprenant une canalisation insérée dans un fourreau et la composition selon l'invention dans l'espace interstitiel entre le fourreau et la canalisation.
**Fig. 4**
   [Fig. 4] La figure 4 est une photo du résultat d'un test au brouillard salin (4A 360h ; 4B 720h) d'une composition hors de l'invention.
**Fig. 5**

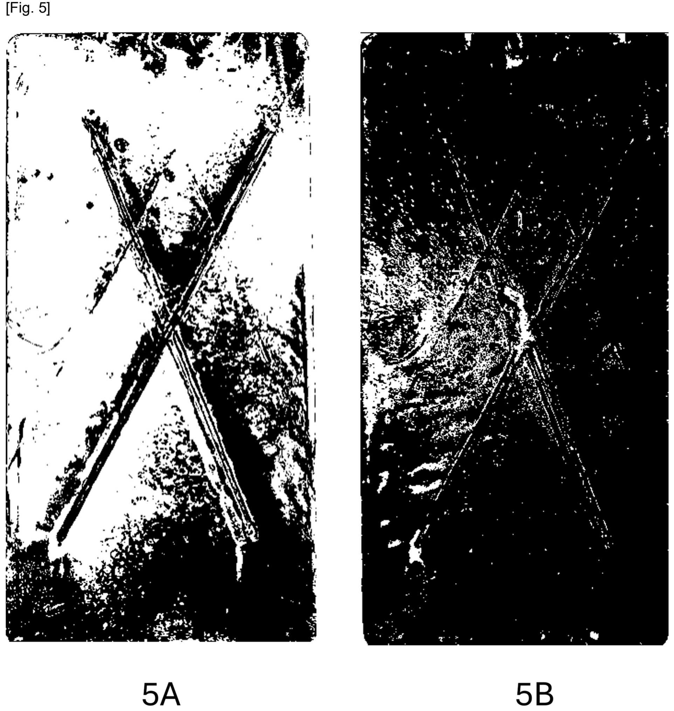

   [Fig. 5] La figure 5 est une photo du résultat d'un test au brouillard salin (5A 360h ; 5B 720h) d'une composition selon l'invention.

### Description détaillée de l'invention

### La composition pour le remplissage de l'espace interstitiel

Du fait de sa destination, la composition doit satisfaire un certain nombre de critères. Premièrement, la composition doit pouvoir être injectée de manière homogène dans tout le volume de l'espace interstitiel entre la canalisation et le fourreau. Deuxièmement, une fois en place, la composition doit durer dans le temps, que ce soit en terme mécanique ou chimique.

En effet, pour que la composition selon l'invention soit efficace pour lutter contre le phénomène de corrosion, il est préférable que celle-ci occupe l'ensemble de l'espace interstitiel, afin d'éviter toute intrusion d'eau ou d'air et de protéger toute la surface de la canalisation.

Par ailleurs, selon une démarche vertueuse de préservation de l'environnement, il est souhaitable que la composition soit biosourcée.

Il est du mérite de la demanderesse d'avoir pu élaborer une composition biosourcée, à faible impact carbone, qui présente l'ensemble des propriétés suivantes :
- insolubilité dans l'eau,
- isolant électrique,
- injectable,
- stable chimiquement et physiquement.

Les caractères « injectable » et « stable chimiquement et physiquement » nécessite de trouver un compromis entre flexibilité, la composition doit pouvoir être injectée de manière homogène, et solidité, la composition ne doit pas craqueler, que ce soit en raison de contraintes mécaniques ou de vieillissement. En particulier, la température au sein d'une canalisation peut varier entre environ 110°C et environ 60°C, en fonction de la pression et du débit du fluide transporté dans ladite canalisation. La viscosité est donc préférablement inférieure à environ 0,2 Pa.s à 110°C et supérieure à environ 1,5 Pa.s à 60°C.

De manière surprenante, la Demanderesse a pu satisfaire l'ensemble de ces critères grâce à une composition comprenant de la poix biosourcée et de la cire biosourcée dans un ratio massique poix biosourcée sur cire biosourcée, m_{P}/m_{C}, compris entre 2,5 et 5,5.

Par ailleurs, une des vertus de la composition selon l'invention est d'être respectueuse de l'environnement, notamment par sa nature biosourcée. Le caractère biosourcé d'une matière première organique peut être caractérisé par sa teneur en carbone biogénique. Ainsi, la composition selon l'invention présente avantageusement en outre un ratio molaire carbone fossile sur carbone total n_{CO2f}/n_{CO2t} inférieur à 0,01.

### La poix biosourcée

Comme mentionné plus haut, la composition selon l'invention comprend de la poix biosourcée.

Dans un mode de réalisation, la poix est de la poix d'huile de tall. La poix d'huile de tall est un sous-produit issu de la fabrication de pâte à papier par le procédé Kraft. Plus précisément, la poix d'huile de tall est un produit obtenu par distillation d'huile de tall, qui se présente sous forme visqueuse à température ambiante. Elle se compose, par exemple, d'environ 40% d'acides résiniques libres ou estérifiés, 50% d'acides gras libres ou estérifiés, 10% de composés insaponifiables (dont des stérols).

La poix d'huile de tall présente l'avantage d'être un résidu d'un processus de transformation chimique, biosourcé et à faible valeur ajoutée. Elle présente également de bonnes propriétés de compatibilité avec le bitume et d'adhésion sur les granulats.

L'origine végétale et renouvelable de la poix d'huile de tall (industries papetière et sylvicole) en font un véritable « stock de carbone biogénique ». La quantité de CO₂ fixée par les végétaux pendant leur croissance, par photosynthèse, est supérieure à la quantité de CO₂ émise par transformation industrielle des matières premières (cf. « FDES Enrobé Biophalt », site internet Base-INIES.fr). En outre, ladite matière première est totalement découplée du risque de concurrence avec le circuit agro-alimentaire.

### La cire biosourcée

Conformément à l'invention, la composition comprend une cire biosourcée.

De manière préférée, le cire biosourcée présente un taux de carbone biogénique supérieur ou égal à 99% par rapport au nombre total de carbone de ladite cire biosourcée.

Avantageusement, la cire biosourcée est la cire de carnauba, la cire d'abeille ou un mélange de celles-ci.

### Le ratio massique poix sur cire biosourcée

Conformément à l'invention, le ratio massique poix biosourcée sur cire biosourcée, m_{P}/m_{C}, compris entre 2,5 et 5,5.

Ce ratio permet d'obtenir le compromis nécessaire entre flexibilité et solidité. En particulier, le ratio permet d'obtenir une composition présentant une viscosité adéquate pour son injectabilité.

Dans un mode de réalisation préféré, le ratio m_{P}/m_{C} est compris entre 3,5 et 4,5, de préférence le ratio m_{P}/m_{C} est d'environ 4.

### Autres composants optionnels

La composition selon l'invention peut comprendre d'autres composants optionnels.

A titre d'exemple, la composition selon l'invention peut comprendre en outre au moins un polymère.

Dans un mode de réalisation particulier, ledit polymère est choisi dans le groupe comprenant, avantageusement constitué de, les polyoléfines, les composés à base de styrène-butadiène, le styrène-butadiène-styrène (SBS), le styrène-polyisopropène-styrène, le polystyrène-b-poly(éthylène-butylène)-b-polystyrène, les esters de vinyle et de butyle, les polyuréthannes, la lignine, le latex, et leurs mélanges, de préférence le polymère est le SBS.

### L'utilisation de la composition selon l'invention

La présente divulgation concerne également l'utilisation de la composition, décrite ci-dessus, pour protéger un élément métallique contre un phénomène de corrosion.

La composition selon l'invention est particulièrement adaptée à son utilisation pour protéger un élément métallique tel qu'une canalisation contenue dans un fourreau.

### L'ensemble canalisation

La présente divulgation propose aussi un ensemble canalisation (1) comprenant une canalisation (2), contenue dans un fourreau (3) et présentant un espace interstitiel (4) entre la canalisation (2) et le fourreau (3), caractérisé en ce que l'espace interstitiel (4) comprend la composition décrite ci-dessus.

### Exemples

### Exemple 1 : préparation et injection d'une composition selon l'invention

2 600 kg de poix d'huile de tall chauffée à 55°C ont été introduits dans une cuve. La température de la cuve a ensuite été portée à 110°C.

650 kg de cire végétale (CERAUBA T3) ont été introduits de manière séquentielle de sorte à maintenir la température intérieure de la cuve à au moins 90°C.

Après introduction de la cire, la température est ajustée à 105°C pendant 1h30. La température est alors abaissée à 100°C et le mélange a été mis sous agitation pendant 24h.

La composition obtenue présente une viscosité de 1,8 Po à 90°C.

La composition est refroidie à température ambiante pour stockage et acheminement.

Une fois sur site, la température de la composition est élevée à 110°C.

La composition est injectée dans l'espace interstitiel (4) d'un ensemble canalisation (1) comprenant une canalisation (2) et un fourreau (3).

La figure 2 montre une découpe de l'ensemble canalisation comprenant la composition selon l'invention (5) dans l'espace interstitiel (4).

La figure 3 montre une autre découpe de l'ensemble canalisation comprenant la composition selon l'invention (5) dans l'espace interstitiel (4).

Sur ces deux figures, il est visible que la composition selon l'invention a été injectée de manière homogène et qu'elle est stable chimiquement et physiquement.

### Exemple 2 : test du brouillard salin

2 compositions ont été préparées selon le protocole indiqué à l'exemple 1 dans des quantités plus faibles pour réaliser le test du brouillard salin. Selon l'exemple E1 (selon l'invention), le ratio Poix d'huile de tall sur Cire végétale est, ratio mₚ/m_{c}, de 4, pour l'exemple CE1 (hors invention) le ratio Poix d'huile de tall sur Cire végétale est, ratio mₚ/m_{c}, de 5,6.

Ces deux compositions ont été placées dans une enceinte ASCOTT SP1000 en accord avec la norme NF EN ISO 9227 selon les conditions suivantes :
- Salinité : 50 ± 5 g/L,
- Température de l'enceinte : 35 °C / Température du saturateur : 45°C,
- Retombée : 1,5 ± 0,5 mL pour une surface horizontale de 80cm²,
- pH : 6,5 - 7,2,
- Inclinaison de l'échantillon : 20° par rapport à la verticale,
- Type de blessure : Croix,
- Largeur : 1 mm.

Les résultats sont répertoriés dans le tableau 1 [Tableau 1] ci-dessous :

**Tableau 1**

| | E1 | | CE1 | |
|---|---|---|---|---|
| **Essai au brouillard salin neutre** | 360 h | 720 h | 360 h | 720 h |
| selon NF EN ISO 9227 (2017) | | | | |
| **Cotation du degré de cloquage** | 0 | 0 | Non mesurable | Non mesurable |
| selon NF EN ISO 4628-2 | | | | |
| **Cotation du degré d'enrouillement** | Ri0 | Ri0 | Ri4 (>8% de la surface) | Ri4 (>8% de la surface) |
| selon NF EN ISO 4628-3 | | | | |

Ainsi, comme illustré aux figures 4 et 5, la composition selon l'invention (E1) permet de protéger la plaque métallique de l'oxydation, contrairement à la composition hors invention (CE1).

## Revendications

1. Ensemble canalisation (1) comprenant une canalisation (2), contenue dans un fourreau (3) et présentant un espace interstitiel (4) entre la canalisation (2) et le fourreau (3), **caractérisé en ce que** l'espace interstitiel (4) comprend une composition comprenant de la poix biosourcée et de la cire biosourcée dans un ratio massique poix biosourcée sur cire biosourcée, m_{P}/m_{C}, compris entre 2,5 et 5,5.

2. Ensemble canalisation (1) selon la revendication 1, **caractérisée en ce que** le ratio m_{P}/m_{C} est compris entre 3,5 et 4,5, de préférence le ratio m_{P}/m_{C} est d'environ 4.

3. Ensemble canalisation (1) selon l'une des revendications précédentes, **caractérisée en ce que** la poix biosourcée est de la poix d'huile de tall.

4. Ensemble canalisation (1) selon l'une des revendications précédentes, **caractérisée en ce que** la cire biosourcée présente un taux de carbone biogénique supérieur ou égal à 99% par rapport au nombre total de carbone de ladite cire biosourcée.

5. Ensemble canalisation (1) selon l'une des revendications précédentes, **caractérisée en ce que** la cire biosourcée est la cire de carnauba, la cire d'abeille ou un mélange de celles-ci.

6. Ensemble canalisation (1) selon l'une des revendications précédentes, **caractérisée en ce qu'**elle présente en outre un ratio molaire carbone fossile sur carbone total nCO2f/nCO2t inférieur à 0,01.

7. Ensemble canalisation (1) selon l'une des revendications précédentes, **caractérisée en ce qu'**elle comprend en outre au moins un polymère.

8. Ensemble canalisation (1) selon la revendication 7, **caractérisée en ce que** ledit polymère est choisi dans le groupe comprenant, avantageusement constitué de, les polyoléfines, les composés à base de styrène-butadiène, le styrène-butadiène-styrène (SBS), le styrène-polyisopropène-styrène, le polystyrène-b-poly(éthylène-butylène)-b-polystyrène, les esters de vinyle et de butyle, les polyuréthannes, la lignine, le latex, et leurs mélanges, de préférence le polymère est le SBS.

9. Utilisation d'une composition comprenant de la poix biosourcée et de la cire biosourcée dans un ratio massique poix biosourcée sur cire biosourcée, m_{P}/m_{C}, compris entre 2,5 et 5,5 pour protéger contre un phénomène de corrosion un ensemble canalisation (1) comprenant une canalisation (2), contenue dans un fourreau (3) et présentant un espace interstitiel (4) entre la canalisation (2) et le fourreau (3), **caractérisé en ce que** l'espace interstitiel (4).
